# FASCICULE DE BREVET EUROPEEN

(11) **EP 2 707 191 B1**
(45) Date de publication et mention de la délivrance du brevet: **06.03.2019**
(21) Numéro de dépôt: 12722551.4
(22) Date de dépôt: 02.05.2012
(51) Int. Cl.: B29C 45/16, B60J 10/00

(54) **PROFILE MOULE PAR MULTI-INJECTION FORMANT UN JOINT D'ETANCHEITE OU UN ENJOLIVEUR POUR CARROSSERIE DE VEHICULE AUTOMOBILE, ET SON PROCEDE DE FABRICATION**
DURCH MEHRFACHSPRITZGIESSEN GEFORMTER PROFILABSCHNITT UND FORMEN EINER DICHTUNG ODER EINER FORM FÜR DIE KAROSSERIE EINES KRAFTFAHRZEUGES SOWIE HERSTELLUNGSVERFAHREN DAFÜR
PROFILE SECTION MOULDED BY MULTI-INJECTION MOULDING AND FORMING A SEAL OR A MOULDING FOR THE BODY OF A MOTOR VEHICLE, AND METHOD FOR MANUFACTURING SAME

(30) Priorité: 10.05.2011 FR 1153993
(43) Date de publication de la demande: 19.03.2014
(73) Titulaire: Hutchinson, 75008 Paris (FR)
(72) Inventeur: BLOTTIAU, Olivier, F-45120 Cepoy (FR)
(74) Mandataire: Gevers & Orès
(86) Numéro de dépôt international: PCT/IB2012/052187
(87) Numéro de publication internationale: WO 2012/153234

(56) Documents cités:
- FR-A1- 2 825 945
- FR-A1- 2 901 187
- US-A- 5 913 762
- US-A- 6 103 168

## Description

La présente invention concerne un profilé moulé par multi-injection de matériaux thermoplastiques de duretés différentes formant un joint d'étanchéité ou un enjoliveur pour carrosserie de véhicule automobile avec une ou plusieurs surfaces antifriction et/ou d'aspect rehaussé, et un procédé de fabrication de ce profilé. L'invention s'applique à tous joints d'étanchéité utilisables sur de tels véhicules, notamment ceux choisis parmi les lécheurs intérieurs et extérieurs, les coulisses, les joints de double étanchéité, et également à tous enjoliveurs équipant ces véhicules comme par exemple des enjoliveurs de cadre de porte, de lécheur, de coulisse ou de vitre fixe (e.g. enjoliveurs de vitre de custode fixe latérale arrière ou d'une vitre de hayon, ou encore enjoliveurs de pare-brise ou de lunette arrière).

L'état de la technique comprend notamment le document FR-A1-2 901 187.

Un joint d'étanchéité de carrosserie automobile possède généralement les fonctions suivantes:
- celle de tenir sur son support, lequel est formé d'un élément de la carrosserie, cette fonction de tenue étant généralement assurée par une partie rigide formée d'une pince de section en U ou d'une embase globalement plane présentant des ajours pour le passage de clips ou d'agrafes intermédiaires de fixation sur le support ;
- celle d'assurer via une surface « glissante » un contact étanche entre ce support et un vitrage fixe ou mobile ou un autre élément de la carrosserie (par exemple entre un panneau de porte et une vitre coulissante dans le cas d'un lécheur intérieur ou extérieur, ou entre un cadre de porte et un côté de caisse dans le cas d'un joint « entre-cadres »), ce contact étanche étant généralement obtenu par une zone de matière souple sur laquelle se trouve un revêtement antifriction très souvent constitué de floc ; et
pièces environnantes et qui est en outre pérenne, ne perdant pas ses qualités d'aspect au fil du temps.

Ce revêtement antifriction est actuellement le résultat soit d'une dépose « en ligne » de colle puis de poils de floc (généralement en polyamide ou en polyéther sulfone), soit du laminage d'une bande floquée, ces deux procédés pouvant être mis en oeuvre :
- pour des joints extrudés, en ligne au cours de l'extrusion, ou
- pour des joints moulés, en reprise lors d'une opération supplémentaire succédant à un moulage par multi-injection de chaque joint.

Quant au revêtement d'aspect, il peut être obtenu soit sous forme de film par laminage sur un joint extrudé ou par peinture, par exemple, soit par ajout d'un enjoliveur rapporté pour conférer au joint l'aspect souhaité.

Un inconvénient majeur de la dépose ou du laminage de ces revêtements sur des profilés, en ligne comme en reprise, réside dans l'activation préalable du support qui est en général requise pour permettre l'adhésion de la colle ou de la bande. De plus, on observe souvent que la découpe en reprise de type poinçon-matrice généralement effectuée pour la finition du joint extrudé, outre son coût supplémentaire, peut engendrer des amorces de décollement de la bande, ce décollement étant accentué par l'usage quotidien plus ou moins intensif du joint une fois monté sur le véhicule (e.g. coulissement, vibrations, contact des mains, notamment).

Un autre inconvénient inhérent aux procédés de dépose en ligne est que l'extrusion qui est nécessairement utilisée dans ce cas ne permet pas de réaliser une pièce de section non constante, ni de traiter des zones « cachées » (i.e. non accessibles) d'un profilé par des surfaces antifriction ou d'aspect rehaussé, et ne permet pas non plus de traiter simultanément, d'une part, la face longitudinale du profilé à pourvoir d'un revêtement antifriction ou celle à pourvoir d'un film d'aspect et, d'autre part, les tranches d'extrémité arrondies ou anguleuses de ce profilé.

Quant aux procédés existants de bi-injection, ils présentent l'inconvénient de ne pas prévoir l'utilisation simultanée de plusieurs bandes ou films, ni le revêtement des tranches d'extrémité des profilés. En effet, les vignettes appliquées à ce jour au fond des moules de bi-injection ne recouvrent que la face longitudinale concernée (quasi-plane ou galbée) du profilé, avec les risques majeurs suivants pour le revêtement antifriction ou d'aspect obtenu par cette vignette, qui peut se révéler :
- soit trop courte, en laissant visible une partie de la face d'aspect dont on souhaitait rehausser l'aspect par la vignette ou bien en laissant non recouverte une partie fonctionnelle qui présentera, dans le cas d'un revêtement antifriction, un coefficient de frottement trop élevé et engendrera des dysfonctionnements de la zone traitée comme le retournement de la lèvre du lécheur, le broutement du vitrage devant y coulisser, etc. ;
- soit trop longue, avec la vignette qui vient en surépaisseur ou se retourne et engendre un mauvais fonctionnement de la partie fonctionnelle qu'elle recouvre ou des difficultés d'assemblage (e.g. bourrage), ou bien qui dépasse de façon inesthétique des extrémités du profilé, obligeant à une opération supplémentaire de découpe en reprise.

Un but de la présente invention est de proposer un profilé moulé par multi-injection de matériaux thermoplastiques de duretés différentes formant un joint d'étanchéité ou un enjoliveur pour carrosserie de véhicule automobile, le profilé permettant de remédier à l'ensemble des inconvénients précités et comprenant au moins :
- un revêtement antifriction intimement lié à une face d'étanchéité longitudinale du profilé et destiné à assurer un contact étanche avec un élément mobile du véhicule, cette face d'étanchéité se terminant sensiblement à angle droit en ses extrémités respectives par deux tranches transversales d'étanchéité du profilé, et/ou
- un film d'aspect intimement lié à une face longitudinale visible du profilé monté sur le véhicule et destiné à rehausser l'aspect de cette face visible, laquelle est distincte de ladite face d'étanchéité et se termine sensiblement à angle droit en ses extrémités respectives par deux tranches transversales visibles du profilé.

A cet effet, un profilé selon l'invention est tel que ces matériaux sont surmoulés :
(i) soit sur ledit au moins un revêtement ou sur ledit au moins un film, le(s)quel(s) revêtement(s) ou le(s)quel(s) film(s) est/sont en outre intimement lié(s) de manière continue par ce surmoulage à l'une au moins desdites tranches d'étanchéité ou à l'une au moins desdites tranches visibles, respectivement,
(ii) soit à la fois sur ledit au moins un revêtement et sur ledit au moins un film, le(s)quel(s) revêtement(s) et le(s)quel(s) film(s) sont optionnellement en outre intimement liés de manière continue par ce surmoulage à l'une au moins desdites tranches d'étanchéité et à l'une au moins desdites tranches visibles, respectivement.

On notera que, par définition, ce profilé moulé par multi-injection selon l'invention présente de manière visuellement reconnaissable un plan de joint ou ligne de séparation inhérent(e) au moulage et que, comme cela sera expliqué en détail ci-après, on entend de manière connue par multi-injection des injections séquentielles de plusieurs matériaux dans un même moule, i.e. essentiellement les étapes successives suivantes dans le cas particulier de la bi-injection :
- injection d'un premier matériau dans une première empreinte du moule,
- ouverture du moule,
- rotation d'une partie mobile du moule portant ce premier matériau injecté,
- fermeture du moule avec une seconde partie comprenant une seconde empreinte complémentaire à la première, puis
- injection d'un second matériau dans la seconde empreinte.

On pourra par exemple se référer au document FR-A1-2 897 564 au nom de la Demanderesse pour une description précise d'un moule utilisable pour mettre en oeuvre une multi-injection.

On notera également que :
- conformément au cas (i) et optionnellement au cas (ii), ce profilé de l'invention est tel le(s)dit(s) revêtement(s) ou le(s)dit(s) film(s) recouvrent ladite au moins une tranche transversale d'extrémité du profilé sans adhésif intermédiaire, puisque la solidarisation intime entre ce(s) revêtement(s) ou ce(s) film(s) et le profilé résulte uniquement du surmoulage, à l'exclusion de toute fixation rapportée notamment, et que
- conformément au cas (ii) qui prévoit l'obtention conjointe par multi-injection du ou des revêtement(s) antifriction et du ou des film(s) d'aspect indépendamment de ce recouvrement optionnel des tranches correspondantes, ce profilé de l'invention remédie à l'inconvénient précité des procédés de bi-injection selon l'art antérieur qui est de ne pas permettre le recouvrement simultané d'une face d'étanchéité et d'une face visible du profilé par un tel revêtement et par un tel film, respectivement.

Et ce recouvrement selon l'invention des tranches d'extrémité du profilé par le(s)dit(s) revêtement(s) antifriction et/ou par le(s)dit(s) film(s) d'aspect, en complément du recouvrement de la face longitudinale concernée - quasi plane ou non - du profilé, permet d'assurer un contact glissant et/ou un aspect parfait même sur les extrémités du profilé, ce qui lui confère :
- dans le cas d'un joint d'étanchéité, tel qu'un lécheur interne ou externe : une meilleure étanchéité grâce au revêtement antifriction recouvrant la face d'étanchéité du joint (zone « compressible » sur la tranche de la lèvre de léchage contre le brin vertical de la coulisse) ; et/ou
- dans le cas d'un tel joint ou d'un enjoliveur : un aspect parfait des extrémités du film d'aspect puisqu'on ne risque pas d'en apercevoir les tranches, étant précisé qu'un décollement de ce film dans des zones sollicitées est ainsi avantageusement exclu.

On notera en outre que le « retour » du revêtement antifriction sur les tranches d'extrémités du profilé (i.e. sur les tranches de la lèvre d'étanchéité du joint) permet également de masquer les dispersions de longueur du joint qui pourraient engendrer un manque de « glissant » et l'absence de contact sur les brins verticaux de coulisse, ce qui est problématique en utilisation sur le véhicule.

Par ailleurs, il convient de noter que ce recouvrement de ladite au moins une tranche du profilé par ce(s) revêtement(s) et/ou ce(s) film(s) se distingue en particulier des recouvrements obtenus dans l'art antérieur précité par surmoulage sur une vignette de matériaux bi-injectés, en ce que :
- chaque revêtement et/ou film obtenu selon l'invention n'est ni trop court, ni trop long et, par conséquent, ne laisse apparente aucune partie non recouverte de la face d'étanchéité et/ou visible du profilé et ne dépasse pas de la ou des tranche(s) qu'il recouvre de sorte à éviter toute découpe ultérieure, tout problème de surépaisseur ou de retournement en utilisation, et en ce que
- ce profilé de l'invention peut présenter à la fois ce revêtement antifriction et ce film d'aspect respectivement sur sa face d'étanchéité et sur sa face visible, contrairement aux profilés bi-injectés connus où seul un unique revêtement ou film était solidarisé avec les matériaux injectés.

Selon une autre caractéristique de l'invention, ledit au moins un revêtement et/ou film présente(nt), vu(s) en section longitudinale dans un plan de coupe sensiblement perpendiculaire à ladite face d'étanchéité et/ou à ladite face visible, respectivement, une portion médiane plate ou galbée épousant le contour de cette face et se prolongeant continûment par exemple via un arrondi en l'une au moins desdites tranches, de sorte que ce(s) revêtement(s) et/ou ce(s) film(s) présente(nt) sensiblement dans ce plan de coupe de préférence une forme de « 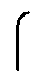 » en ladite ou chaque tranche qu'il(s) recouvre(nt).

Avantageusement, ledit au moins un revêtement et/ou ledit au moins un film peu(ven)t présenter sensiblement en l'une au moins desdites deux tranches cette forme de « 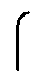 », la ou chaque tranche pouvant être alors légèrement évasée par rapport à l'angle droit suivant un angle obtus par exemple compris entre 90 et 120° ou bien en variante suivant un angle inférieur à 90°. Ce dernier cas relatif à un angle aigu pour le recouvrement de la ou de chaque tranche d'étanchéité et/ou visible concerne notamment les films d'aspect, qui doivent dans certains cas suivre les contraintes de style et les cinématiques particulières des ouvrants.

Selon un mode préférentiel de réalisation de l'invention, ce profilé forme spécifiquement un joint d'étanchéité, comprenant une portion de fixation en totalité ou en partie réalisée en au moins un matériau rigide qui est destinée à être montée sur un support du véhicule et qui présente ladite face visible, et une portion d'étanchéité en au moins un matériau souple qui est reliée à la portion de fixation et qui présente ladite face d'étanchéité, le profilé comprenant le(s)dit(s) revêtement(s) de type floc sur la portion d'étanchéité et/ou le(s)dit(s) film(s) par exemple de type brillant ou chromé sur la portion de fixation.

Conformément à ce mode préférentiel de l'invention, ce profilé peut avantageusement comprendre à la fois le(s)dit(s) revêtement(s) et le(s)dit(s) film(s) respectivement sur lesdites faces d'étanchéité et visible qui définissent des faces dorsales des portions d'étanchéité et de fixation et qui sont par exemple situées à l'opposé l'une de l'autre dans la direction transversale du profilé.

Comme expliqué ci-dessus, la formation conjointe du ou des revêtement(s) antifriction et du ou des film(s) d'aspect sur le joint d'étanchéité via ce surmoulage par multi-injection n'a jamais été obtenue dans l'art antérieur, à la connaissance de la Demanderesse, et constitue un exemple préférentiel de réalisation de l'invention.

Dans ce cas, ce(s) revêtement(s) et ce(s) film(s) peuvent recouvrir tous deux ledit au moins un matériau souple respectivement sur la portion d'étanchéité et sur la portion de fixation, cette dernière comportant, d'une part, ledit au moins un matériau rigide qui est dépourvu du ou des film(s) et, d'autre part, un enrobage partiel de ce matériau rigide réalisé en ledit au moins un matériau souple qui définit ladite face visible recouverte de ce(s) film(s).

En variante, ce(s) revêtement(s) peu(ven)t recouvrir ledit au moins un matériau souple sur la portion d'étanchéité, et ce(s) film(s) peu(ven)t recouvrir ledit au moins un matériau rigide sur la portion de fixation, cette dernière comportant ledit au moins un matériau rigide destiné à être montée au contact dudit support et, optionnellement en outre, au moins une lèvre réalisée en ledit au moins un matériau souple qui prolonge ladite face visible et qui est dépourvue de ce(s) film(s).

Selon une autre caractéristique de l'invention commune à l'ensemble des caractéristiques précitées, ladite portion de fixation peut être par exemple adaptée pour former une âme de serrage sur ledit support. En variante, la portion de fixation peut être adaptée pour être montée par clipage sur le support via une pluralité de pions ou clips qui traversent de manière espacée cette portion de fixation et qui sont destinés à traverser un orifice de ce support. Selon une autre variante, ladite portion de fixation peut se terminer par une jambe munie de pointes à la manière d'une extrémité de harpon, pour son accrochage dans une portion de section en U du support.

Selon un exemple de réalisation de ce mode préférentiel de l'invention commun aux exemples et à la variante précités, ce profilé forme à titre de joint d'étanchéité un lécheur intérieur ou extérieur pour vitrage mobile du véhicule, dans lequel ladite portion de fixation peut être réalisée en ledit au moins un matériau rigide et ladite portion d'étanchéité peut comprendre au moins une lèvre d'étanchéité reliée à ladite portion de fixation (dans le cas particulier où cette dernière forme à la manière d'une pince une âme de serrage sur le support, cette lèvre d'étanchéité peut être reliée à une branche de ladite portion de fixation en formant sensiblement un « V » en section transversale).

D'une manière générale en référence à l'ensemble des caractéristiques précitées de la présente invention, on notera que ledit au moins un matériau rigide peut être constitué de tout polymère thermoplastique (TP) utilisable pour constituer la portion de fixation d'un joint d'étanchéité ou d'un enjoliveur sur un véhicule automobile. Avantageusement, ce(s) polymère(s) thermoplastique(s) peu(ven)t être choisi dans le groupe constitué par les polypropylènes, les polyamides, les chlorures de polyvinyle (PVC), les polyméthacrylates de méthyle (PMMA), les terpolymères acrylonitrile-butadiène-styrène (ABS) et leurs mélanges, et est de préférence un polypropylène renforcé par une charge par exemple choisie dans le groupe constitué par le talc, le chanvre, le bois, le liège, les fibres de verre et leurs mélanges (la fonction de cette charge étant d'augmenter la rigidité du matériau de base). On notera que d'autres polymères thermoplastiques sont utilisables, et que le choix de ces polymères répond en particulier à un compromis entre le coût et la rigidité des matériaux en question.

Egalement d'une manière générale, on notera que ledit au moins un matériau souple peut être avantageusement constitué d'un élastomère thermoplastique (TPE) de dureté ou rigidité inférieure à celle de ce(s) matériau(x) rigide(s), tel qu'un élastomère thermoplastique styrénique (TPS, e.g. un SEBS) ou un vulcanisat thermoplastique (TPV, e.g. du « Santoprene » ou du « Vegaprene »).

A titre de revêtement(s) antifriction utilisable(s) dans les joints d'étanchéité de l'invention, on peut par exemple citer des bandes floquées multicouches telles que celles commercialisées par la société Dimontonate Floccati et décrites dans le Brevet EP-B1-2 121 303, i.e. comprenant au moins une couche thermo-adhésive par exemple à base d'un copolymère éthylène-propylène, une première couche adhésive par exemple à base d'un polypropylène greffé, une couche de polymère de polycondensation thermoplastique, une seconde couche adhésive par exemple à base d'un polyuréthanne et un floc par exemple à base d'un polyester ou polyamide. On notera néanmoins que des revêtements antifriction autres que des bandes floquées sont utilisables dans la présente invention, comme par exemple du poléthylène haute densité (PEHD) ou du polyéthylène réticulé (PER) ou une autre matière plastique glissante se présentant sous forme de bande.

Un procédé de fabrication selon l'invention d'un profilé tel que défini ci-dessus comprend un surmoulage par multi-injection, dans un unique moule de multi-injection de type rotatif à parties fixe et mobile, desdits matériaux thermoplastiques de duretés différentes au contact d'une ou plusieurs bande(s) destinée(s) à former ledit au moins un revêtement antifriction et/ou film d'aspect, la ou chaque bande étant maintenue en position lors de chaque injection de telle manière qu'elle se plaque au contact du ou de chaque matériau injecté pour recouvrir d'une manière continue :
- dans ledit cas (i) : non seulement ladite face longitudinale d'étanchéité ou ladite face longitudinale visible mais en outre l'une au moins desdites tranches correspondantes d'étanchéité ou visible en lui étant intimement liée du seul fait de ce surmoulage, ou
- dans ledit cas (ii): à la fois cette face longitudinale d'étanchéité et cette face longitudinale visible et optionnellement en outre l'une au moins desdites tranches correspondantes d'étanchéité et visible en leur étant intimement liée du seul fait de ce surmoulage.

On notera que c'est lors de l'injection dans les conditions adaptées de pression et de température que la cohésion se fait entre, d'une part, la ou les bande(s) antifriction et/ou la ou les bande(s) d'aspect et, d'autre part, le matériau thermoplastique injecté à son contact.

On notera également que l'un des intérêts du profilé ainsi obtenu tient dans le fait qu'il est produit en un seul poste d'outillage constitué du moule de multi-injection et selon plusieurs séquences détaillées ci-après.

On notera en outre que conformément à ce cas (ii), un profilé selon l'invention peut incorporer simultanément à l'issue du procédé de multi-injection un ou plusieurs revêtement(s) antifriction et un ou plusieurs film(s) d'aspect, par la mise en place conjointe dans le moule de la ou de chaque bande d'étanchéité et de la ou de chaque bande d'aspect, et cela indépendamment du recouvrement précité desdites tranches.

Pour la fabrication d'un joint d'étanchéité à titre de profilé comprenant une portion de fixation en totalité ou en partie réalisée en au moins un matériau rigide qui est destinée à être montée sur un support du véhicule et qui présente ladite face visible, et une portion d'étanchéité en au moins un matériau souple qui est reliée à la portion de fixation et qui présente ladite face d'étanchéité, le profilé comprenant le revêtement de type floc sur la portion d'étanchéité et/ou le film par exemple de type brillant ou chromé sur la portion de fixation, le procédé de multi-injection selon l'invention peut comprendre des injections séquentielles dans des empreintes distinctes dudit moule dudit au moins un matériau rigide dans au moins une première empreinte puis dudit au moins un matériau souple dans au moins une seconde empreinte, l'injection de ce matériau souple étant réalisée après ouverture, rotation d'une partie mobile du moule contenant le matériau rigide injecté puis fermeture du moule.

Selon un premier exemple de réalisation de l'invention, ce procédé pour la fabrication dudit joint comprend les étapes successives suivantes pour l'obtention à la fois du revêtement et du film respectivement sur ces portions d'étanchéité et de fixation :
a) mise en place d'une bande d'aspect destinée à former ce film en un premier emplacement dudit moule,
b) injection directement sur cette bande d'aspect dudit au moins un matériau rigide destiné à former une âme de serrage de la portion de fixation sur ledit support,
c) mise en place d'une bande antifriction destinée à former ce revêtement en un second emplacement de ladite partie fixe du moule, puis
d) injection directement sur cette bande antifriction dudit au moins un matériau souple pour l'obtention de ladite portion d'étanchéité formée d'un seul tenant avec ladite portion de fixation.

On notera que le revêtement recouvre ainsi ce(s) matériau(x) souple(s) sur la portion d'étanchéité, et que ce film recouvre ce(s) matériau(x) rigide(s) sur la portion de fixation.

Selon un second exemple de réalisation de l'invention, ce procédé pour la fabrication dudit joint comprend les étapes successives suivantes pour l'obtention à la fois dudit revêtement et dudit film respectivement sur ces portions d'étanchéité et de fixation :
a) injection dudit au moins un matériau rigide destiné à former une âme de serrage de la portion de fixation sur ledit support,
b) mise en place, en un premier et second emplacements dudit moule, d'une bande antifriction et d'une bande d'aspect respectivement destinées à former le revêtement et le film, puis
c) injection directement sur cette bande antifriction et sur cette bande d'aspect dudit au moins un matériau souple pour l'obtention des portions d'étanchéité et de fixation formée d'un seul tenant et présentant respectivement ce revêtement et ce film.

On notera que le revêtement et le film recouvrent ainsi tous deux ce(s) matériau(x) souple(s), tant sur la portion d'étanchéité que sur la portion de fixation.

Selon une autre caractéristique de l'invention, ce procédé de fabrication du joint peut comprendre une aspiration de la ou des bande(s) destinée(s) à former ledit revêtement et/ou ledit film lors de l'injection, via une pluralité de canaux d'aspiration formés à travers ledit moule et débouchant respectivement sur ladite face d'étanchéité et/ou sur ladite face visible, pour maintenir la ou chaque bande en position dans le moule.

Avantageusement, ce procédé peut comprendre en outre optionnellement le positionnement d'au moins une lamelle de protection en un matériau microporeux dans le moule, la ou chaque lamelle recevant la bande antifriction destinée à former le revêtement et/ou la bande d'aspect destinée à former le film et étant apte à éviter un marquage de cette bande du fait de l'aspiration.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue latérale d'un véhicule automobile illustrant des exemples de zones de ce véhicule pouvant être équipées de profilés selon l'invention, formant en particulier des joints d'étanchéité,
la figure 2 est une vue en section transversale d'un moule de bi-injection contenant un joint d'étanchéité suivant le plan de coupe IIa-IIa ou IIb-IIb de la figure 1, ce joint formant un lécheur de vitrage selon ledit second exemple de l'invention, et présentant à la fois ledit revêtement et ledit film,
la figure 3 est une vue en section transversale de ce moule contenant un joint d'étanchéité formant un lécheur de vitrage selon ledit premier exemple de l'invention et présentant à la fois ce revêtement et ce film,
la figure 4 est une vue en section transversale de ce moule contenant un joint d'étanchéité formant un lécheur selon une variante de la figure 3 correspondant également audit premier exemple de l'invention et présentant à la fois ce revêtement et ce film,
la figure 5 est une vue schématique partielle en section longitudinale d'un profilé de l'art antérieur, suivant deux plans de coupe respectivement perpendiculaires à deux faces longitudinales d'étanchéité et visible du profilé qui sont recouvertes d'un revêtement antifriction et d'un film d'aspect,
la figure 6 est une vue schématique partielle en section longitudinale d'un profilé selon l'invention de type joint d'étanchéité ou enjoliveur, qui montre un exemple de recouvrement des tranches d'extrémité du profilé par ledit revêtement et par ledit film, suivant ces mêmes plans de coupe par exemple représentés par les plans VIa-VIa et VIb-VIb de la figure 4,
la figure 7 est une photographie montrant en perspective un lécheur de l'art antérieur dont le recouvrement de la face d'étanchéité par un revêtement antifriction est tel qu'illustré à la figure 5,
la figure 8 est une photographie montrant en perspective un lécheur selon l'invention dont le recouvrement de la face d'étanchéité par un revêtement antifriction, tranches d'extrémité incluses, est tel qu'illustré à la figure 6,
la figure 9 est une vue schématique en coupe transversale dudit moule de bi-injection illustrant la cinématique de différentes parties de ce moule dans une configuration intermédiaire, après obtention de la portion de fixation du joint de la figure 4,
la figure 10 est une vue schématique en coupe transversale du moule de la figure 9, illustrant la cinématique globale de l'ensemble de ses parties ainsi que des moyens de maintien dans ce moule des bandes destinées à former le revêtement et le film, pour l'obtention des portions de fixation et d'étanchéité du joint de la figure 4,
la figure 11 est une vue schématique en coupe transversale d'un moule de bi-injection selon une variante de la figure 10, montrant d'autres moyens de maintien dans le moule de la bande destinée à former le revêtement, pour ce même joint de la figure 4,
la figure 12 est une vue schématique partielle en section longitudinale d'un moule de bi-injection selon l'invention utilisable pour obtenir l'ensemble des joints illustrés aux figures 2 à 4, par exemple vu suivant les plans de coupe XIIa-XIIa et XIIb-XIIb de la figure 10, qui montre à l'instar de la figure 6 la géométrie interne du moule permettant le recouvrement des tranches d'extrémité du profilé par ledit revêtement et par ledit film selon des angles obtus formés par ces tranches,
la figure 13 est une vue schématique partielle en section longitudinale d'un autre moule de bi-injection selon l'invention, conformément à une variante de la figure 12 montrant sa géométrie interne pour le recouvrement par ledit revêtement et par ledit film d'une tranche d'étanchéité selon un angle obtus et d'une tranche visible selon un angle aigu, et
les figures 14 à 17 sont respectivement des vues en section transversale de quatre profilés formant des lécheurs de vitrage selon des variantes des figures 2 à 4, dont les portions de fixation sont fixées aux supports correspondants par des clips (figures 14, 15 et 17) ou par des organes d'accrochage de type harpon (figure 16) et qui présentent chacun un ou plusieurs revêtements antifriction et un film d'aspect à l'exception du profilé de la figure 15 qui présente uniquement un tel revêtement.

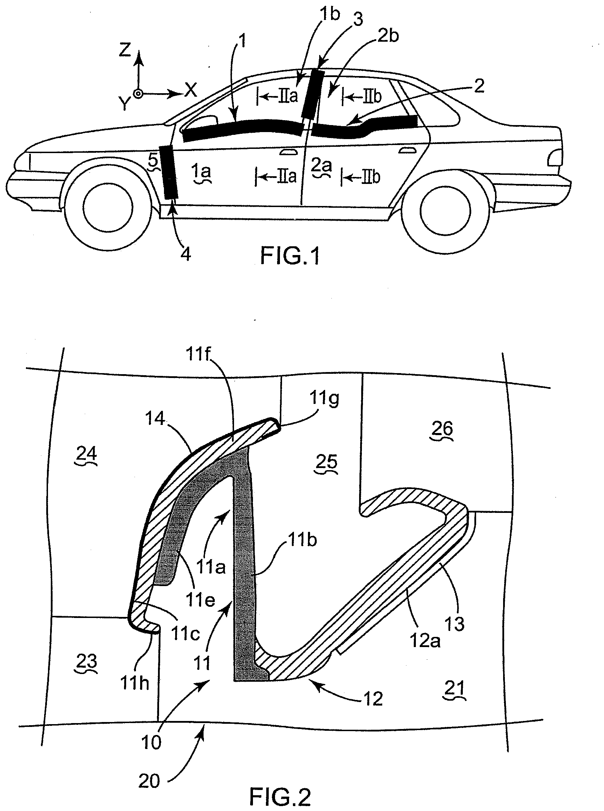

Dans ce qui suit, on utilisera de manière usuelle les qualificatifs « axialement interne » et « axialement externe » pour désigner la position d'un élément de profilé vers l'intérieur et vers l'extérieur, respectivement, dans la direction axiale Y de la largeur du véhicule (cette direction horizontale transversale Y étant par définition perpendiculaire au plan XZ défini par les directions horizontale longitudinale X et verticale Z). On pourra se reporter aux figures 1, 4 et 6 pour visualiser ces directions X, Y et Z.

Comme illustré à la figure 1, un profilé selon l'invention peut former un enjoliveur ou un joint d'étanchéité en divers emplacements 1, 2, 3 et/ou 4 de la carrosserie d'un véhicule automobile, par exemple dans le cas d'un joint d'étanchéité pour assurer via un revêtement antifriction un contact étanche entre un support de la carrosserie et un autre élément du véhicule comme par exemple un vitrage fixe ou mobile. Les zones 1 et 2 montrent chacune un profilé constituant un lécheur intérieur ou extérieur assurant l'étanchéité entre un panneau de porte 1a, 2a et un vitrage coulissant 1b, 2b, alors que la zone 3 montre un joint d'étanchéité dit « entre-cadres » entre le cadre de la porte adjacente et le côté de caisse, et que la zone 4 montre un joint vertical assurant l'étanchéité entre le bord antérieur de chaque porte latérale avant 1a et l'aile adjacente 5 du véhicule. On notera toutefois qu'un profilé selon l'invention pourrait être utilisé en d'autres emplacements que ceux illustrés à la figure 1.

On a illustré aux figures 2 à 4 trois exemples de surmoulage par bi-injection d'un joint d'étanchéité 10, 10', 10" selon l'invention, par exemple un lécheur de vitrage tel que ceux correspondant aux zones 1 et 2 de la figure 1. Chaque lécheur 10, 10', 10" comprend une portion de fixation 11, 11', 11" sur un support de carrosserie qui présente une âme rigide formant pince 11a, 11a', 11a" destinée à être serrée sur ce support, et une portion souple d'étanchéité 12, 12', 12" entre ce support et le vitrage mobile 1b, 2b qui est reliée à la portion de fixation 11, 11', 11" à la manière d'une articulation et qui est constituée dans cet exemple d'une lèvre d'étanchéité formant sensiblement un « V » en section transversale avec la branche adjacente 11b, 11b', 11b" de l'âme rigide 11a, 11a', 11a".

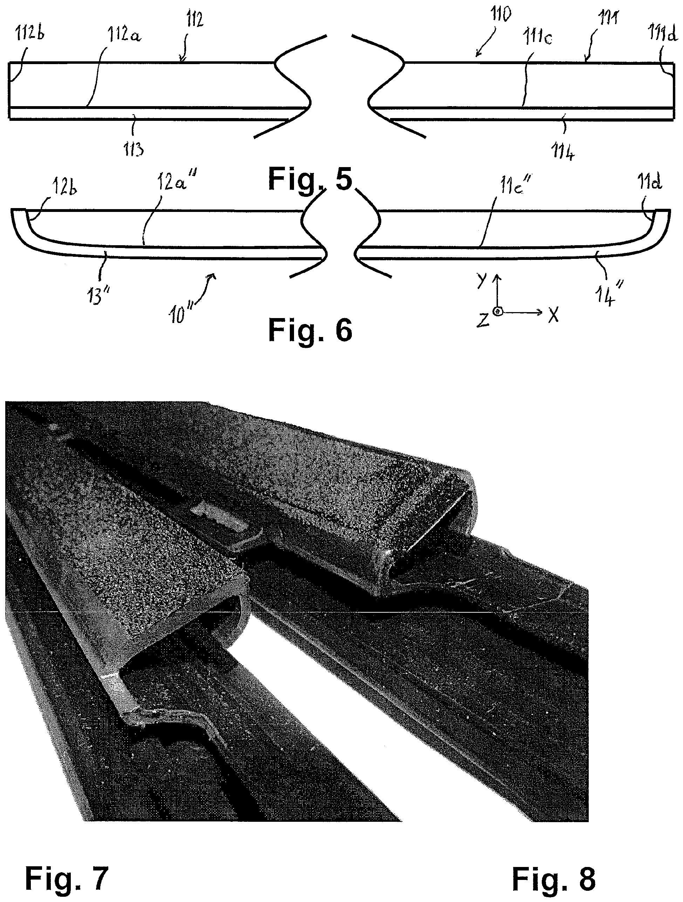

Selon ces exemples préférentiels de l'invention, chaque joint 10, 10', 10" incorpore à la fois :
- un revêtement antifriction 13, 13', 13" venu de surmoulage qui recouvre intimement non seulement la face longitudinale d'étanchéité 12a, 12a', 12a" du dos de la lèvre d'étanchéité 12, 12', 12", mais en outre les deux tranches d'étanchéité d'extrémité 12b (i.e. dans la direction transversale Y, voir figure 6 et également la photographie de la figure 8) de cette lèvre 12, 12', 12" ; et
- un film d'aspect 14, 14', 14" également venu de surmoulage qui recouvre intimement non seulement la face longitudinale visible 11c, 11c', 11c" du dos de la portion de fixation 11, 11', 11", mais en outre les deux tranches visibles d'extrémité 11d (également dans la direction Y, voir figure 6) de l'autre branche 11e, 11e', 11e" de cette portion de fixation 11, 11', 11" définissant cette face visible 11c, 11c', 11c".

Contrairement à cela, on peut voir à la figure 5 qu'un joint d'étanchéité 110 selon l'art antérieur, tel qu'un lécheur, présente usuellement son revêtement antifriction 113 uniquement sur sa face longitudinale d'étanchéité 112a sans que ce revêtement 113 recouvre les tranches 112b de sa portion d'étanchéité 112, et/ou son film d'aspect 114 uniquement sur sa face longitudinale visible 111c sans que ce film 114 recouvre les tranches 111d de sa portion de fixation 111.

Plus précisément et comme illustré à la figure 2, tant le revêtement 13 que le film 14 du joint de léchage 10 sont déposés sur au moins un matériau souple constituant la lèvre d'étanchéité 12 et un enrobage externe 11f de la branche rigide 11e de l'âme 11a formant pince (par exemple sur un seul et même matériau dans le cas d'une bi-injection, étant précisé que cette lèvre 12 et cet enrobage 11f pourraient être réalisés en deux matériaux souples différents). Comme visible à la figure 2, le revêtement antifriction 13 recouvre la lèvre d'étanchéité 12 sur la majeure partie de son profil oblique se terminant juste en deçà de l'extrémité recourbée de cette lèvre 12. Quant au film d'aspect 14, il recouvre dans cet exemple non seulement la face longitudinale visible de l'enrobage de branche 11e et les deux tranches d'extrémité 11d de celle-ci, mais encore les bords longitudinaux 11g et 11h de cet enrobage 11f. On notera que ce film d'aspect 14 pourrait recouvrir de manière différente la portion de fixation 11 du joint 10, tout en restant dans le cadre de l'invention.

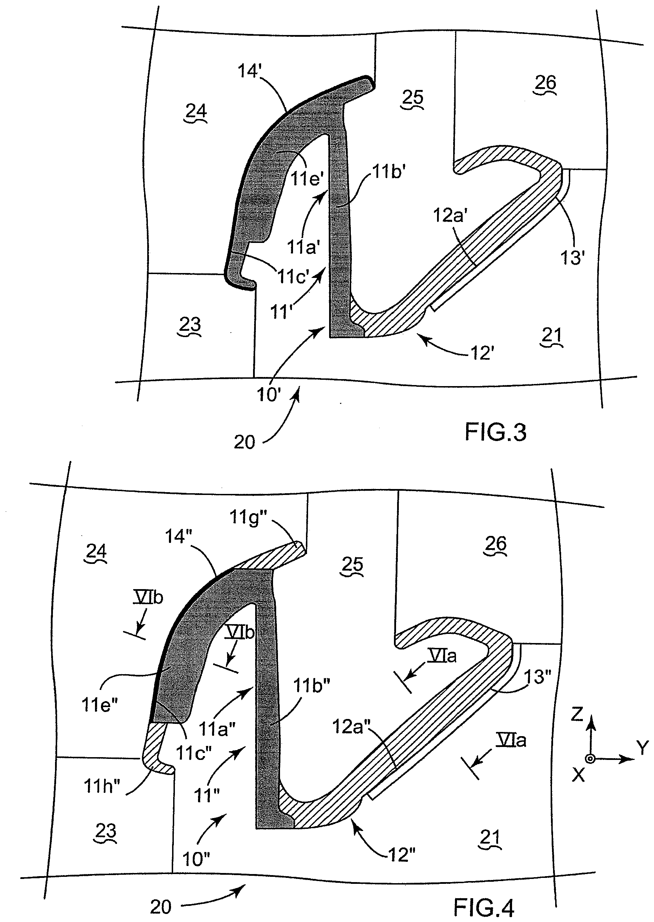

Le joint de léchage 10' de la figure 3 se différencie uniquement de celui de la figure 2, en ce que la branche 11e' de la portion de fixation 11' qui est la plus éloignée de la portion d'étanchéité 12' est dépourvue de matériau souple d'enrobage, étant directement recouverte du film d'aspect 14' qui s'étend de manière analogue au film 14 de la figure 2. En d'autres termes, cette portion de fixation 11' est entièrement constituée de l'âme rigide formant pince 11a' et incorporant le film 14.

Le joint de léchage 10" de la figure 4 se différencie uniquement de celui de la figure 3, en ce que la branche 11e" de la portion de fixation 11" qui est la plus éloignée de la portion d'étanchéité 12" a ses deux bords longitudinaux supérieur et inférieur qui sont constitués par de courtes lèvres 11g" et 11h" et qui prolongent la face longitudinale visible 11c" de cette branche 11e" (laquelle est dépourvue de matériau souple d'enrobage tout comme la branche 11e').

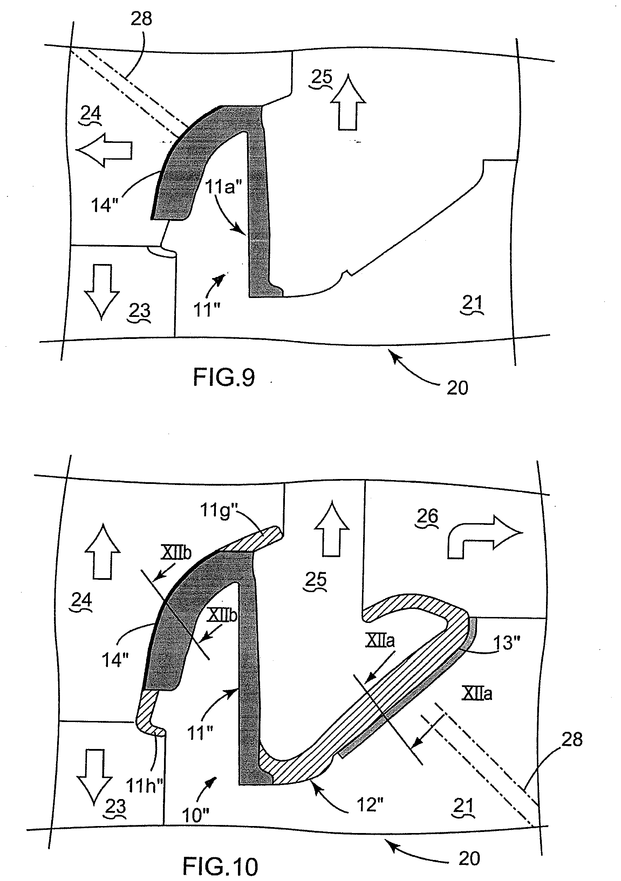

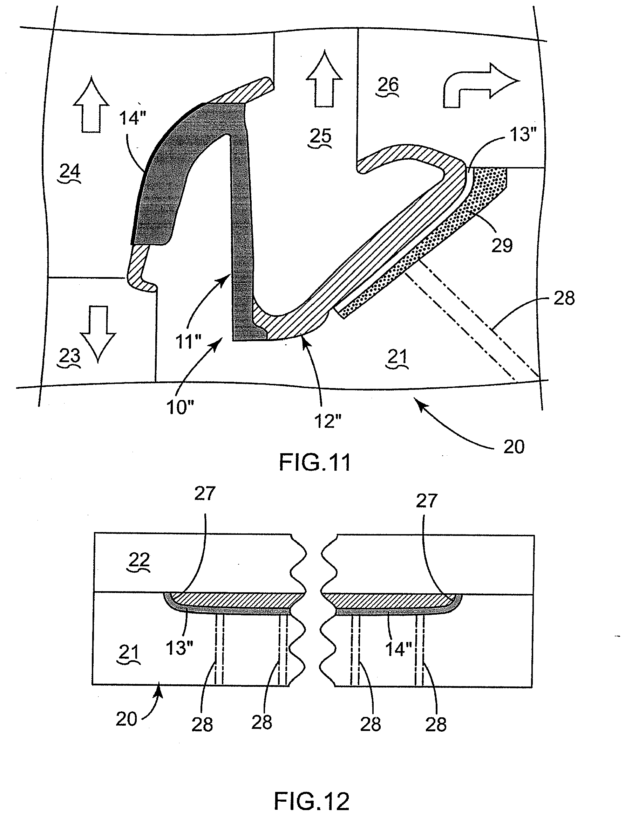

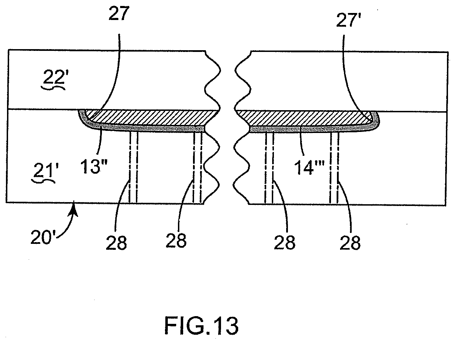

Les figures 9 à 11 illustrent un exemple de cinématique du moule de bi-injection 20 utilisable pour l'obtention de ce joint 10" de la figure 4, ce moule 20 comportant essentiellement une partie fixe 21 en son fond et une partie mobile 22 (voir figure 12) comportant une pluralité de secteurs 23, 24, 25, 26 dont les mouvements respectifs d'ouverture par rapport à cette partie fixe 21 sont identifiés par des flèches. Pour l'obtention du recouvrement des tranches d'extrémité respectivement d'étanchéité 12b et visible 11d du profilé 10" visible à la figure 6, on prévoit avantageusement dans le moule 20 des rayons de courbure 27 adaptés pour générer un « retour » en arrondi (sensiblement en forme de « 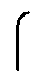 ») du revêtement 13" et/ou du film 14" recouvrant ces tranches 12b, 11d, comme illustré à la figure 12 dans le cas de rayons de courbure évasés 27 formant sensiblement un angle obtus et, à la figure 13, dans le cas d'un rayon de courbure 27' en contre-dépouille formant sensiblement un angle aigu dans le moule 20' dont les parties fixe 21' et mobile 22' sont représentées (à la figure 13 le rayon 27' en contre-dépouille qu'épouse de manière continue le film d'aspect 14''' est illustré pour la seule tranche visible 11d, mais on comprendra que ce rayon 27' pourrait également être utilisé pour la tranche d'étanchéité 12b).

Les bandes antifriction et/ou d'aspect respectivement destinées à former ce revêtement 13" et/ou ce film 14" sont soit de largeur fixe et déroulées d'une bobine, soit de formes complexes et, dans ce cas, elles peuvent être découpées d'une bobine puis thermoformées, ou bien découpées d'une feuille plate à l'emporte-pièce. Ces bandes peuvent aussi consister en une feuille dépassant du moule 20, que l'on vient découper après moulage pour l'ajuster au produit fini.

Ces bandes antifriction et/ou d'aspect sont positionnées dans le moule 20 par un opérateur ou un automate, et elles peuvent être maintenues en place par aspiration (i.e. vide), par électromagnétisme ou par un adhésif, par exemple. Dans le cas de leur maintien par aspiration, l'on peut utiliser des canaux 28 aménagés dans le moule 20 (voir figures 10 à 13), en intercalant optionnellement une lamelle de protection 29 en un matériau de type microporeux pour éviter le marquage de ces bandes par le bord débouchant de chaque canal d'aspiration 28. Les figures 10 et 11 montrent ces canaux d'aspiration 28, étant précisé que le film d'aspect 14" a été déjà solidarisé avec le matériau rigide.

Dans cet exemple de réalisation des figures 9 à 11 qui se réfère à l'obtention du joint 10" de la figure 4, on commence par mettre en place dans le moule 20 la bande d'aspect destinée à former le film d'aspect 14" sur la portion de fixation du joint 10", puis on injecte sur cette bande d'aspect le matériau rigide destiné à former l'âme 11a". On dispose ensuite au fond de la partie fixe 21 du moule 20 la bande antifriction destinée à former le revêtement antifriction 13", puis on injecte le matériau souple (e.g. à base d'un TPE) destiné à former la portion d'étanchéité 12" dont une partie vient au contact de cette bande antifriction et dont une autre partie vient prolonger l'âme rigide 11a" en ses bords longitudinaux en y formant les lèvres 11g" et 11h" (visibles à la figure 10).

On notera que l'on peut procéder de même pour l'obtention du joint 10' selon la variante de la figure 3, à ceci près que le matériau souple injecté forme exclusivement la portion d'étanchéité 12'.

Pour l'obtention du joint 10 de la figure 2, on commence par injecter le matériau rigide destiné à former l'âme 11a. On dispose ensuite dans le moule 20 les deux bandes antifriction et d'aspect respectivement destinées à former le revêtement antifriction 13 et le film d'aspect 14, puis on injecte le matériau souple (e.g. à base d'un TPE), d'une part, au contact de la bande antifriction pour y former la portion d'étanchéité 12 et, d'autre part, au contact de la bande d'aspect pour y former l'enrobage 11f de la branche 11e de la portion de fixation 11.

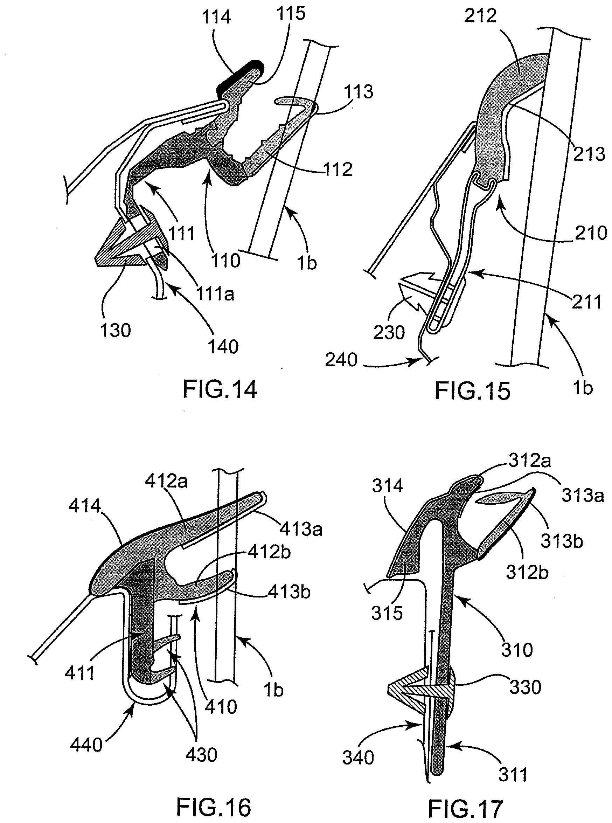

Le profilé 110 formant lécheur de vitrage 1b illustré à la figure 14 comporte une portion de fixation 111 qui, en lieu et place de l'âme de serrage rigide formant pince 11a, 11a', 11a" des profilés 10, 10', 10" des figures 2 à 4, présente une zone rigide munie d'un orifice 111a recevant des pions ou clips 130 de fixation au support de carrosserie 140 qu'ils traversent de manière espacée. Ce profilé 110 présente un film d'aspect 114 selon l'invention recouvrant par surmoulage une lèvre souple 115 qui prolonge la portion de fixation 111 à l'opposé des clips 130 et qui est montée contre un rebord du support 140. Quant à la portion d'étanchéité du profilé 110, elle comporte une lèvre souple 112 qui s'étend sensiblement parallèlement à la lèvre 115 et qui est recouverte par surmoulage d'un revêtement antifriction 113 selon l'invention.

Le profilé 210 formant lécheur de vitrage 1b illustré à la figure 15 comporte une portion de fixation 211 formée d'une jambe rigide traversée de manière espacée par des clips 230 de fixation au support de carrosserie 240. Quant à la portion d'étanchéité de ce profilé 210, elle est formée d'une lèvre souple 212 qui prolonge à l'état contraint la jambe 211 sensiblement dans la même direction et qui est recouverte par surmoulage d'un revêtement antifriction 213 selon l'invention.

Le profilé 310 formant lécheur de vitrage illustré à la figure 17 comporte une portion de fixation 311 également formée d'une jambe rigide traversée de manière espacée par des clips 330 de fixation au support de carrosserie 340. Ce profilé 310 présente un film d'aspect 314 selon l'invention recouvrant par surmoulage un tronçon rigide 315 qui prolonge latéralement l'extrémité de la jambe 311 opposée aux clips 330 et qui est monté contre un rebord du support 340. Quant à la portion d'étanchéité de ce profilé 310, elle est formée d'une première lèvre rigide 312a qui prolonge le tronçon 315 de l'autre côté de la jambe 311 sensiblement dans la même direction et qui est recouverte par surmoulage d'un revêtement antifriction 313a selon l'invention, et d'une seconde lèvre souple 312b qui s'étend parallèlement à la première lèvre 312a et qui est recouverte par surmoulage d'un autre revêtement antifriction 313b selon l'invention.

Le profilé 410 formant lécheur de vitrage 1b illustré à la figure 16 comporte une portion de fixation 411 également formée d'une jambe rigide mais qui, au lieu d'être traversée par des clips de fixation au support de carrosserie 440, présente une extrémité longitudinale 430 en forme de pointe de harpon qui permet l'accrochage du profilé 410 à l'intérieur d'une portion en U de ce support 440. Ce profilé 410 présente un film d'aspect 414 selon l'invention recouvrant par surmoulage la face dorsale d'une lèvre souple 412a qui prolonge latéralement l'extrémité de la jambe 411 opposée à l'extrémité d'accrochage 430 et qui est montée contre un rebord du support 440. Quant à la portion d'étanchéité de ce profilé 410, elle est formée de cette lèvre souple 412a qui est recouverte sur son autre face par surmoulage d'un revêtement antifriction 413a selon l'invention, et d'une autre lèvre souple 412b qui s'étend parallèlement à la lèvre 412a et qui est recouverte par surmoulage d'un autre revêtement antifriction 413b selon l'invention. Ainsi, ce profilé 410 présente globalement une section en forme de « F » dont la grande barre de sommet est formée par la lèvre 412a, dont la petite barre médiane est formée par la lèvre 412b et dont le jambage présente vers sa base l'extrémité d'accrochage 430 de type harpon.

## Revendications

1. Profilé (10, 10', 10", 110, 210, 310, 410) moulé par multi-injection de matériaux thermoplastiques de duretés différentes formant un joint d'étanchéité ou un enjoliveur pour carrosserie (1a, 2a) de véhicule automobile, le profilé comprenant au moins :
- un revêtement antifriction (13, 13', 13", 113, 213, 313a, 313b, 413a, 413b) intimement lié à une face d'étanchéité longitudinale (12a, 12a', 12a") du profilé et destiné à assurer un contact étanche avec un élément mobile (1b, 2b) du véhicule, cette face d'étanchéité se terminant sensiblement à angle droit en ses extrémités longitudinales respectives par deux tranches transversales d'étanchéité (12b) du profilé, et/ou
- un film d'aspect (14, 14', 14", 114, 314, 414) intimement lié à une face longitudinale visible (11c, 11c', 11c") du profilé monté sur le véhicule et destiné à rehausser l'aspect de cette face visible, laquelle est distincte de ladite face d'étanchéité et se termine sensiblement à angle droit en ses extrémités longitudinales respectives par deux tranches transversales visibles (11d) du profilé,
**caractérisé en ce que** lesdits matériaux sont surmoulés :
(i) soit sur ledit au moins un revêtement ou sur ledit au moins un film, le(s)quel(s) revêtement(s) ou le(s)quel(s) film(s) est/sont en outre intimement lié(s) de manière continue par ce surmoulage à l'une au moins desdites tranches d'étanchéité ou à l'une au moins desdites tranches visibles, respectivement,
(ii) soit à la fois sur ledit au moins un revêtement et sur ledit au moins un film, le(s)quel(s) revêtement(s) et le(s)quel(s) film(s) sont optionnellement en outre intimement liés de manière continue par ce surmoulage à l'une au moins desdites tranches d'étanchéité et à l'une au moins desdites tranches visibles, respectivement.

2. Profilé (10, 10', 10", 110, 210, 310, 410) selon la revendication 1, **caractérisé en ce qu'**il forme ledit joint d'étanchéité, comprenant une portion de fixation (11, 11', 11", 111, 211, 311, 411) en totalité ou en partie réalisée en au moins un matériau rigide qui est destinée à être montée sur un support du véhicule et qui présente ladite face visible (11c, 11c', 11c"), et une portion d'étanchéité (12, 12', 12", 112, 212, 312a, 312b, 412a, 412b) en au moins un matériau souple qui est reliée à la portion de fixation et qui présente ladite face d'étanchéité (12a, 12a', 12a"), le profilé comprenant le(s)dit(s) revêtement(s) (13, 13', 13", 113, 213, 313a, 313b, 413a, 413b) de type floc sur ladite portion d'étanchéité et/ou le(s)dit(s) film(s) (14, 14', 14", 114, 314, 414) par exemple de type brillant ou chromé sur ladite portion de fixation.

3. Profilé (10, 10', 10", 110, 310, 410) selon la revendication 2, **caractérisé en ce qu'**il comprend à la fois le(s)dit(s) revêtement(s) (13, 13', 13", 113, 313a, 313b, 413a, 413b) et le(s) dit(s) film(s) (14, 14', 14", 114, 314, 414) respectivement sur lesdites faces d'étanchéité (12a, 12a', 12a") et visible (11c, 11c', 11c") qui définissent des faces dorsales desdites portions d'étanchéité (12, 12', 12", 112, 312a, 312b, 412a, 412b) et de fixation (11, 11', 11", 111, 311, 411) et qui sont par exemple situées à l'opposé l'une de l'autre dans la direction transversale du profilé.

4. Profilé (10, 110, 410) selon la revendication 3, **caractérisé en ce que** le(s)dit(s) revêtement(s) (13, 113, 413a, 413b) et le(s)dit(s) film(s) (14, 114, 414) recouvrent tous deux ledit au moins un matériau souple respectivement sur ladite portion d'étanchéité (12, 112, 412a, 412b) et sur ladite portion de fixation (11, 111, 411), cette dernière comportant, d'une part, ledit au moins un matériau rigide qui est dépourvu dudit film et, d'autre part, un enrobage partiel (11f) de ce matériau rigide réalisé en ledit au moins un matériau souple qui définit ladite face visible (11c) recouverte de ce film.

5. Profilé (10', 10", 310) selon la revendication 3, **caractérisé en ce que** ledit revêtement (13', 13", 313b) recouvre ledit au moins un matériau souple sur ladite portion d'étanchéité (12', 12", 312b) et **en ce que** ledit film (14', 14", 314) recouvre ledit au moins un matériau rigide sur ladite portion de fixation (11', 11", 311), cette dernière comportant ledit au moins un matériau rigide destiné à être montée au contact dudit support et, optionnellement en outre, au moins une lèvre (11g", 11h") réalisée en ledit au moins un matériau souple qui prolonge ladite face visible (11c") et qui est dépourvue de ce film (14").

6. Profilé (10, 10', 10" ou 110, 210, 310) selon une des revendications 2 à 5, **caractérisé en ce que** ladite portion de fixation (11, 11', 11") est adaptée pour former une âme de serrage sur ledit support à la manière d'une pince, ou **en ce que** ladite portion de fixation (111, 211, 311) est adaptée pour être montée par clipage sur ledit support (140, 240, 340) via une pluralité de pions ou clips (130, 230, 330) qui traversent de manière espacée cette portion de fixation et qui sont destinés à traverser un orifice de ce support.

7. Profilé (410) selon une des revendications 2 à 5, **caractérisé en ce que** ladite portion de fixation (411) se termine par une jambe munie de pointes (430) à la manière d'une extrémité de harpon, pour son accrochage dans une portion de section en U dudit support (440).

8. Profilé (10, 10', 10", 110, 210, 310, 410) selon une des revendications 2 à 7, **caractérisé en ce qu'**il forme à titre de joint d'étanchéité un lécheur intérieur ou extérieur pour vitrage mobile (1b, 2b) du véhicule, dans lequel ladite portion de fixation (11, 11', 11", 111, 211, 311, 411) est réalisée en ledit au moins un matériau rigide et ladite portion d'étanchéité (12, 12', 12", 112, 212, 312a, 312b, 412a, 412b) comprend au moins une lèvre d'étanchéité reliée à ladite portion de fixation.

9. Procédé de fabrication d'un profilé (10, 10', 10", 110, 210, 310, 410) selon une des revendications précédentes, **caractérisé en ce qu'**il comprend un surmoulage par multi-injection, dans un unique moule (20, 20') de multi-injection de type rotatif à parties fixe (21, 21') et mobile (22, 22', 23, 24, 25, 26), desdits matériaux thermoplastiques de duretés différentes au contact d'une ou plusieurs bande(s) destinée(s) à former ledit au moins un revêtement antifriction (13, 13', 13", 113, 213, 313a, 313b, 413a, 413b) et/ou film d'aspect (14, 14', 14", 114, 314, 414), la ou chaque bande étant maintenue en position lors de chaque injection de telle manière qu'elle se plaque au contact du ou de chaque matériau injecté pour recouvrir d'une manière continue :
- dans ledit cas (i) : non seulement ladite face longitudinale d'étanchéité (12a, 12a', 12a") ou ladite face longitudinale visible (11c, 11c', 11c") mais en outre l'une au moins desdites tranches correspondantes d'étanchéité (12b) ou visible (11d) en lui étant intimement liée du seul fait de ce surmoulage, ou
- dans ledit cas (ii): à la fois cette face longitudinale d'étanchéité et cette face longitudinale visible et optionnellement en outre l'une au moins desdites tranches correspondantes d'étanchéité (12b) et visible (11d) en leur étant intimement liée du seul fait de ce surmoulage.

10. Procédé selon la revendication 9 pour la fabrication d'un joint d'étanchéité à titre de profilé (10, 10', 10", 110, 210, 310, 410) comprenant une portion de fixation (11, 11', 11", 111, 211, 311, 411) en totalité ou en partie réalisée en au moins un matériau rigide qui est destinée à être montée sur un support du véhicule et qui présente ladite face visible (11c, 11c', 11c"), et une portion d'étanchéité (12, 12', 12", 112, 212, 312a, 312b, 412a, 412b) en au moins un matériau souple qui est reliée à la portion de fixation et qui présente ladite face d'étanchéité (12a, 12a', 12a"), le profilé comprenant le(s)dit(s) revêtement(s) (13, 13', 13", 113, 213, 313a, 313b, 413a, 413b) de type floc sur ladite portion d'étanchéité et/ou le(s)dit(s) film(s) (14, 14', 14", 114, 314, 414) par exemple de type brillant ou chromé sur ladite portion de fixation, **caractérisé en ce qu'**il comprend des injections séquentielles dans des empreintes distinctes dudit moule (20, 20') dudit au moins un matériau rigide dans au moins une première empreinte puis dudit au moins un matériau souple dans au moins une seconde empreinte, l'injection de ce matériau souple étant réalisée après ouverture, rotation d'une partie mobile (22, 22') du moule contenant le matériau rigide injecté puis fermeture du moule.

11. Procédé selon la revendication 10, **caractérisé en ce qu'**il comprend les étapes successives suivantes pour l'obtention à la fois dudit ou desdits revêtement(s) (13', 13") et dudit ou desdits film(s) (14', 14") respectivement sur lesdites portions d'étanchéité (12', 12") et de fixation (11', 11") :
a) mise en place d'une bande d'aspect destinée à former ce film en un premier emplacement dudit moule (20, 20'),
b) injection directement sur cette bande d'aspect dudit au moins un matériau rigide destiné à former une âme de serrage (11a', 11a") de la portion de fixation sur ledit support,
c) mise en place d'une bande antifriction destinée à former ce revêtement en un second emplacement de ladite partie fixe (21, 21') du moule, puis
d) injection directement sur cette bande antifriction dudit au moins un matériau souple pour l'obtention de ladite portion d'étanchéité formée d'un seul tenant avec ladite portion de fixation.

12. Procédé selon la revendication 10, **caractérisé en ce qu'**il comprend les étapes successives suivantes pour l'obtention à la fois dudit revêtement (13) et dudit film (14) respectivement sur lesdites portions d'étanchéité (12) et de fixation (11):
a) injection dudit au moins un matériau rigide destiné à former une âme de serrage (11a) de la portion de fixation sur ledit support,
b) mise en place, en un premier et second emplacements dudit moule (20), d'une bande antifriction et d'une bande d'aspect respectivement destinées à former ledit revêtement et ledit film, puis
c) injection directement sur cette bande antifriction et sur cette bande d'aspect dudit au moins un matériau souple pour l'obtention desdites portions d'étanchéité et de fixation formée d'un seul tenant et présentant respectivement ledit revêtement et ledit film.

13. Procédé selon une des revendications 9 à 12, **caractérisé en ce qu'**il comprend une aspiration de la ou des bande(s) destinée(s) à former ledit revêtement (13") et/ou ledit film (14", 14''') lors de l'injection, via une pluralité de canaux d'aspiration (28) formés à travers ledit moule (20, 20') et débouchant respectivement sur ladite face d'étanchéité (12a") et/ou sur ladite face visible (11c"), pour maintenir la ou chaque bande en position dans le moule, et de préférence **en ce qu'**il comprend en outre le positionnement d'au moins une lamelle de protection (29) en un matériau microporeux dans ledit moule (20, 20'), la ou chaque lamelle recevant la bande antifriction destinée à former ledit revêtement (13") et/ou la bande d'aspect destinée à former ledit film (14", 14''') et étant apte à éviter un marquage de cette bande du fait de ladite aspiration.

## Patentansprüche

1. Durch Mehrfachspritzgießen von thermoplastischen Materialien unterschiedlicher Härte geformter Profilabschnitt (10, 10', 10", 110, 210, 310, 410), der eine Dichtung oder eine Form für die Karosserie (1a, 2a) eines Kraftfahrzeuges bildet, wobei der Profilabschnitt mindestens Folgendes umfasst:
- eine abriebfeste Beschichtung (13, 13', 13", 113, 213, 313a, 313b, 413a, 413b), die eng mit einer Längsdichtungsfläche (12a, 12a', 12a") des Profilabschnitts verbunden ist und dazu bestimmt ist, einen dichten Kontakt mit einem beweglichen Element (1b, 2b) des Kraftfahrzeuges zu gewährleisten, wobei diese Dichtungsfläche an ihren jeweiligen Längsenden im Wesentlichen im rechten Winkel durch zwei Querdichtungskanten (12b) des Profilabschnitts endet, und/oder
- eine Zierfolie (14, 14', 14", 114, 314, 414), die eng mit einer sichtbaren länglichen Fläche (11c, 11c', 11c") des am Kraftfahrzeug montierten Profilabschnitts verbunden ist und dazu bestimmt ist, das Aussehen dieser sichtbaren Fläche zu verstärken, die sich von der Dichtungsfläche unterscheidet und im Wesentlichen im rechten Winkel an ihren jeweiligen Längsenden durch zwei sichtbare Querkanten (11d) des Profilabschnitts endet,
**dadurch gekennzeichnet, dass** die Materialien umspritzt sind:
(i) entweder auf der mindestens einen Beschichtung oder auf der mindestens einen Folie, wobei die Beschichtun(en) oder die Folie(n) weiter durch diese Umspritzung jeweils mit mindestens einer der Dichtungskanten oder mindestens einer der sichtbaren Kanten kontinuierlich eng verbunden ist/sind,
(ii) entweder sowohl auf der mindestens einen Beschichtung und auf der mindestens einen Folie, wobei die Beschichtun(en) oder die Folie(n) durch diese Umspritzung weiter optional jeweils mit mindestens einer der Dichtungskanten und mindestens einer der sichtbaren Kanten kontinuierlich eng verbunden ist/sind.

2. Profilabschnitt (10, 10', 10", 110, 210, 310, 410) nach Anspruch 1, **dadurch gekennzeichnet, dass** er die Dichtung bildet, umfassend einen Befestigungsabschnitt (11, 11', 11", 111, 211, 311, 411), der ganz oder teilweise aus mindestens einem starren Material besteht, der dazu bestimmt ist, auf einem Träger des Kraftfahrzeuges montiert zu werden, und der die sichtbare Fläche (11c, 11c', 11c") aufweist, und einen Dichtungsabschnitt (12, 12', 12", 112, 212, 312a, 312b, 412a, 412b) aus mindestens einem flexiblen Material, der mit dem Befestigungsabschnitt verbunden ist und der die Dichtungsfläche (12a, 12a', 12a") aufweist, wobei der Profilabschnitt die flockartige(n) Beschichtung(en) (13, 13', 13", 113, 213, 313a, 313b, 413a, 413b) auf dem Dichtungsabschnitt und/oder der/den Folie(n) (14, 14', 14", 114, 314, 414), zum Beispiel in der Art glänzend oder verchromt, auf dem Befestigungsabschnitt, umfasst.

3. Profilabschnitt (10, 10', 10", 110, 310, 410) nach Anspruch 2, **dadurch gekennzeichnet, dass** er sowohl die Beschichtung(en) (13, 13', 13", 113, 313a, 313b, 413a, 413b) als auch die Folie(n) (14, 14', 14", 114, 314, 414) jeweils auf den Dichtungsflächen (12a, 12a', 12a") und sichtbaren Flächen (11c, 11c', 11c") umfasst, welche die dorsalen Flächen der Dichtungsabschnitte (12, 12', 12", 112, 312a, 312b, 412a, 412b) und Befestigungsabschnitte (11, 11', 11", 111, 311, 411) definieren und die sich zum Beispiel einander gegenüberliegend in Querrichtung des Profilabschnitts befinden.

4. Profilabschnitt (10, 110, 410) nach Anspruch 3, **dadurch gekennzeichnet, dass** die Beschichtung(en) (13, 113, 413a, 413b) und die Folie(n) (14, 114, 414) alle beide das mindestens eine flexible Material jeweils auf dem Dichtungsabschnitt (12, 112, 412a, 412b) und auf dem Befestigungsabschnitt (11, 111, 411) bedecken, wobei letztere einerseits das mindestens eine starre Material, das frei von der Folie ist, und andererseits einen Teilüberzug (11f) des starren Materials aus dem mindestens einen flexiblen Material aufweist, das die mit dieser Folie bedeckte sichtbare Fläche (11c) definiert.

5. Profilabschnitt (10', 10", 310) nach Anspruch 3, **dadurch gekennzeichnet, dass** die Beschichtung (13', 13", 313b) das mindestens eine flexible Material auf dem Dichtungsabschnitt (12', 12", 312b) bedeckt, und dadurch, dass die Folie (14', 14", 314) das mindestens eine starre Material auf dem Befestigungsabschnitt (11', 11", 311) bedeckt, wobei dieses letztere das mindestens eine starre Material aufweist, das dazu bestimmt ist, in Kontakt mit dem Träger montiert zu werden, und weiter optional mindestens eine Lippe (11g", 11 h"), die aus dem mindestens einen flexiblen Material hergestellt ist, die sich über die sichtbare Fläche (11c") erstreckt und die frei von dieser Folie (14") ist.

6. Profilabschnitt (10, 10", 10" oder 110, 210, 310) nach einem der Ansprüche 2 bis 5, **dadurch gekennzeichnet, dass** der Befestigungsabschnitt (11, 11', 11") angepasst ist, einen Klemmsteg auf dem Träger in der Art einer Zange zu bilden, oder dadurch, dass der Befestigungsabschnitt (111, 211, 311) angepasst ist, um auf den Träger (140, 240, 340) über eine Vielzahl von Stiften oder Clips (130, 230, 330), die diesen Befestigungsabschnitt in einem Abstand durchlaufen und dazu bestimmt sind, eine Öffnung in diesem Träger zu durchlaufen, durch Anklipsen montiert zu werden.

7. Profilabschnitt (410) nach einem der Ansprüche 2 bis 5, **dadurch gekennzeichnet, dass** der Befestigungsabschnitt (411) in einem Schenkel endet, der mit Spitzen (430) in der Art eines Harpunenendes versehen ist, um in einem Abschnitt mit einem U-Querschnitt des Trägers (440) befestigt zu werden.

8. Profilabschnitt (10, 10', 10", 110, 210, 310, 410) nach einem der Ansprüche 2 bis 7, **dadurch gekennzeichnet, dass** er als Dichtung einen inneren oder äußeren Abstreifer für bewegliche Verglasungen (1b, 2b) des Kraftfahrzeuges bildet, wobei der Befestigungsabschnitt (11, 11', 11", 111, 211, 311, 411) aus dem mindestens einen starren Material hergestellt ist und der Dichtungsabschnitt (12, 12', 12", 112, 212, 312a, 312b, 412a, 412b) mindestens eine Dichtungslippe umfasst, die mit dem Befestigungsabschnitt verbunden ist.

9. Verfahren zur Herstellung eines Profilabschnitts (10, 10', 10", 110, 210, 310, 410) nach einem der vorstehenden Ansprüche, **dadurch gekennzeichnet, dass** es eine Umspritzung durch Mehrfachspritzgießen in einer einzigen, in der Art drehbaren Mehrfachspritzgussform (20, 20') mit feststehenden (21, 21') und beweglichen (22, 22', 23, 24, 25, 26) Teilen umfasst, wobei die thermoplastischen Materialien unterschiedlicher Härte in Kontakt mit einem oder mehreren Streifen dazu bestimmt sind, die mindestens eine abriebfeste Beschichtung (13, 13', 13", 113, 213, 313a, 313b, 413a, 413b) und/oder eine Zierfolie (14, 14', 14", 114, 314, 414) zu bilden, wobei der oder jeder Streifen bei jeder Einspritzung so in Position gehalten wird, dass er in Kontakt mit dem oder jedem eingespritzten Material gebracht wird, um eine kontinuierliche Abdeckung zu gewährleisten:
- in dem Fall (i): nicht nur der länglichen Dichtungsfläche (12a, 12a', 12a") oder der sichtbaren länglichen Fläche (11c, 11c', 11c"), sondern weiter mindestens einer der entsprechenden Dichtungskanten (12b) oder sichtbaren Kanten (11d), die nur aufgrund dieser Umspritzung eng mit ihr verbunden sind, oder
- in dem Fall (ii): sowohl dieser länglichen Dichtungsfläche und diese sichtbare länglichen Fläche und weiter optional mindestens einer der entsprechenden Dichtungskanten (12b) und sichtbaren Kanten (11d), die nur aufgrund dieser Umspritzung eng mit ihnen verbunden sind.

10. Verfahren nach Anspruch 9 zur Herstellung einer Dichtung als Profilabschnitt (10, 10', 10", 110, 210, 310, 410) umfassend einen Befestigungsabschnitt (11, 11', 11", 111, 211, 311, 411), der ganz oder teilweise aus mindestens einem starren Material hergestellt ist, der dazu bestimmt ist, auf einem Träger des Kraftfahrzeuges montiert zu werden und der die sichtbare Fläche (11c, 11c', 11c") aufweist, und einen Dichtungsabschnitt (12, 12', 12", 112, 212, 312a, 312b, 412a, 412b) aus mindestens einem flexiblen Material, der mit dem Befestigungsabschnitt verbunden ist und der die Dichtungsfläche (12a, 12a', 12a") aufweist, wobei der Profilabschnitt die flockartige(n) Beschichtung(en) (13, 13', 13", 113, 213, 313a, 313b, 413a, 413b) auf dem Dichtungsabschnitt und/oder der/den Folie(n) (14, 14', 14", 114, 314, 414), zum Beispiel in der Art glänzend oder verchromt auf dem Befestigungsabschnitt umfasst, **dadurch gekennzeichnet, dass** es sequentielle Einspritzungen in getrennte Hohlräume der Form (20, 20') des mindestens einen starren Materials in mindestens einen ersten Hohlraum umfasst, dann des mindestens einen flexiblen Materials in mindestens einen zweiten Hohlraum, wobei die Einspritzung dieses flexiblen Materials nach dem Öffnen durchgeführt wird, Drehen eines beweglichen Teils (22, 22') der Form, der das eingespritzte starre Material enthält, dann Schließen der Form.

11. Verfahren nach Anspruch 10, **dadurch gekennzeichnet, dass** es die folgenden aufeinanderfolgenden Schritte umfasst, um sowohl die Beschichtung(en) (13', 13") als auch die Folie(n) (14', 14") jeweils auf den Dichtungsabschnitten (12', 12") und Befestigungsabschnitten (11', 11") zu erhalten:
a) Anbringen eines Zierstreifens, der dazu bestimmt ist, diese Folie an einer ersten Stelle der Form (20, 20') zu bilden,
b) Einspritzen direkt auf diesen Zierstreifen des mindestens einen starren Materials, das dazu bestimmt ist, einen Klemmsteg (11a', 11a") des Befestigungsabschnitts auf dem Träger zu bilden,
c) Anbringen eines abriebfesten Streifens zum Bilden dieser Beschichtung an einer zweiten Stelle des feststehenden Teils (21, 21') der Form,dann
d) Einspritzen direkt auf diesen abriebfesten Streifen des mindestens einen flexiblen Materials zum Erhalten des Dichtungsabschnitts, der integral mit dem Befestigungsabschnitt gebildet wird.

12. Verfahren nach Anspruch 10, **dadurch gekennzeichnet, dass** es die folgenden aufeinanderfolgenden Schritte umfasst, um sowohl die Beschichtung (13) als auch die Folie (14) jeweils auf den Dichtungsabschnitten (12) und Befestigungsabschnitten (11) zu erhalten:
a) Einspritzen des mindestens einen starren Materials, das dazu bestimmt ist, einen Klemmsteg (11a) des Befestigungsabschnitts auf dem Träger zu bilden,
b) Anbringen an einer ersten und zweiten Stelle der Form (20), jeweils eines abriebfesten Streifens und eines Zierstreifens jeweils zum Bilden der Beschichtung und der Folie bestimmt, dann
c) Einspritzen direkt auf diesen abriebfesten Streifen und auf diesen Zierstreifen des mindestens einen flexiblen Materials zum Erhalten der Dichtungs- und Befestigungsabschnitte, die integral gebildet sind und jeweils die Beschichtung und die Folie aufweisen.

13. Verfahren nach einem der Ansprüche 9 bis 12, **dadurch gekennzeichnet, dass** es ein Ansaugen des Streifens oder der Streifen umfasst, die dazu bestimmt sind, die Beschichtung (13") und/oder die Folie (14", 14''') während der Einspritzung über eine Vielzahl von Saugkanälen (28) zu bilden, die durch die Form (20, 20') gebildet sind und jeweils in die Dichtungsfläche (12a") und/oder die sichtbare Fläche (11c") münden, um den oder jeden Streifen in der Form in Position zu halten, und vorzugsweise dadurch, dass es weiter das Positionieren mindestens einer Schutzlamelle (29) aus mikroporösem Material in der Form (20, 20') umfasst, wobei die oder jede Lamelle den abriebfesten Streifen, zum Bilden der Beschichtung (13") bestimmt und/oder den Zierstreifen, zum Bilden der Folie (14", 14''') bestimmt, aufnimmt und in der Lage ist, ein Markieren des Streifens durch das Ansaugen zu vermeiden.

## Claims

1. A profile section (10, 10', 10", 110, 210, 310, 410) molded by multi-shot injection molding of thermoplastic materials of different hardnesses forming a seal or trim molding for automotive vehicle bodywork (1a, 2a), the profile section comprising at least:
- an antifriction covering (13, 13', 13", 113, 213, 313a, 313b, 413a, 413b) intimately bonded to a longitudinal sealing face (12a, 12a', 12a") of the profile section and intended to provide sealed contact with a mobile element (1b, 2b) of the vehicle, this sealing face terminating substantially at right angles at its respective longitudinal ends in two sealing transverse edge faces (12b) of the profile section,
and/or
- an embellishing film (14, 14', 14", 114, 314, 414) intimately bonded to a visible longitudinal face (11c, 11c', 11c") of the profile section mounted on the vehicle and intended to heighten the appearance of this visible face, which face is distinct from said sealing face and terminates substantially at right angles at its respective longitudinal ends in two visible transverse edge faces (11d) of the profile section, **characterized in that** said materials are overmolded:
(i) either on said at least one covering or on said at least one film, which covering/s or which film/s is/are also intimately bonded continuously by this overmolding to at least one of said sealing edge faces or to at least one of said visible edge faces, respectively,
(ii) or both to said at least one covering and to said at least one film, which covering/s and which film/s are optionally also intimately bonded continuously by this overmolding to at least one of said sealing edge faces and to at least one of said visible edge faces, respectively.

2. The profile section (10, 10', 10", 110, 210, 310, 410) as claimed in claim 1, **characterized in that** it forms said seal, comprising a fixing portion (11, 11', 11", 111, 211, 311, 411) made completely or in part from at least one rigid material which is intended to be mounted on a support of the vehicle and which has said visible face (11c, 11c', 11c"), and a sealing portion (12, 12', 12", 112, 212, 312a, 312b, 412a, 412b) made from at least one flexible material and which is connected to the fixing portion and has said sealing face (12a, 12a', 12a"), the profile section comprising said covering/s (13, 13', 13", 113, 213, 313a, 313b, 413a, 413b) of flock type on said sealing portion and/or said film/s (14, 14', 14", 114, 314, 414) for example of glossy or chromed type on said fixing portion.

3. The profile section (10, 10', 10", 110, 310, 410) as claimed in claim 2, **characterized in that** it comprises both said covering/s (13, 13', 13", 113, 313a, 313b, 413a, 413b) and said film/s (14, 14', 14", 114, 314, 414) respectively on said sealing (12a, 12a', 12a") and visible (11c, 11c', 11c") faces which define dorsal faces of said sealing (12, 12', 12", 112, 312a, 313b, 412a, 412b) and fixing (11, 11', 11", 111, 311, 411) portions and which are for example situated on opposite sides from one another in the transverse direction of the profile section.

4. The profile section (10, 110, 410) as claimed in claim 3, **characterized in that** said covering/s (13, 113, 413a, 413b) and said film/s (14, 114, 414) both cover said at least one flexible material respectively on said sealing portion (12, 112, 412a, 412b) and on said fixing portion (11, 111, 411), the latter comprising firstly said at least one rigid material which is not provided with said film and secondly a partial coating (11f) of this rigid material made with said at least one flexible material which defines said visible face (11c) covered with this film.

5. The profile section (10', 10", 310) as claimed in claim 3, **characterized in that** said covering (13', 13", 313b) covers said at least one flexible material over said sealing portion (12', 12", 312b) and **in that** said film (14', 14", 314) covers said at least one rigid material over said fixing portion (11', 11", 311), the latter comprising said at least one rigid material intended to be mounted in contact with said support and, optionally also, at least one lip (11g", 11h") made from said at least one flexible material and extending said visible face (11c") and which is not provided with this film (14").

6. The profile section (110, 210, 310) as claimed in one of claims 2 to 5, **characterized in that** said fixing portion (111, 211, 311) is configured to be mounted by clipping on said support (140, 240, 340) via a plurality of pins or clips (130, 230, 330) which in a spaced-apart manner pass through this fixing portion and are intended to pass through an orifice in this support.

7. The profile section (410) as claimed in one of claims 2 to 5, **characterized in that** said fixing portion (411) terminates in a leg provided with spikes (430) like a barbed end of a hook, so that it catches in a U-section portion of said support (440).

8. The profile section (10, 10', 10", 110, 210, 310, 410) as claimed in one of claims 2 to 7, **characterized in that** it forms, by way of a seal, an inner or outer wiping gasket for a vehicle drop glass (1b, 2b), in which said fixing portion (11, 11', 11", 111, 211, 311, 411) is made from said at least one rigid material and said sealing portion (12, 12', 12", 112, 212, 312a, 312b, 412a, 412b) comprises at least one sealing lip connected to said fixing portion.

9. A method of manufacturing a profile section (10, 10', 10", 110, 210, 310, 410) as claimed in one of the preceding claims, **characterized in that** it comprises multi-shot injection overmolding of said thermoplastic materials of different hardnesses in a single multi-shot injection mold (20, 20') of the rotary type having fixed parts (21, 21') and moving parts (22, 22', 23, 24, 25, 26), in contact with one or more strip/s intended to form said at least one antifriction covering (13, 13', 13", 113, 213, 313a, 313b, 413a, 413b) and/or embellishment film (14, 14', 14", 114, 314, 414), the or each strip being held in position during each injection in such a way that it is pressed into intimate contact with the or each material injected in order to cover continuously:
- in said case (i): not only said sealing longitudinal face (12a, 12a', 12a") or said visible longitudinal face (11c, 11c', 11c") but also at least one of said corresponding sealing (12b) or visible (11d) edge faces by being intimately bonded thereto as a result of this overmolding operation alone, or
- in said case (ii): both this sealing longitudinal face and this visible longitudinal face and optionally also at least one of said corresponding sealing (12b) and visible (11d) edge faces by being intimately bonded thereto as a result of this overmolding alone.

10. The method as claimed in claim 9 for manufacturing a seal by way of profile section (10, 10', 10", 110, 210, 310, 410) comprising a fixing portion (11, 11', 11", 111, 211, 311, 411) made completely or in part from at least one rigid material which is intended to be mounted on a support of the vehicle and which has said visible face (11c, 11c', 11c"), and a sealing portion (12, 12', 12", 112, 212, 312a, 312b, 412a, 412b) made from at least one flexible material and which is connected to the fixing portion and has said sealing face (12a, 12a', 12a"), the profile section comprising said covering/s (13, 13', 13", 113, 213, 313a, 313b, 413a, 413b) of flock type on said sealing portion and/or said film/s (14, 14', 14", 114, 314, 414) for example of glossy or chromed type on said fixing portion, **characterized in that** it comprises sequential injections into distinct cavities of said mold (20, 20') of said at least one rigid material into at least one first cavity followed by said at least one flexible material into at least one second cavity, the injection of this flexible material being performed after the mold containing said injected rigid material has been opened, a moving part (22, 22') of the mold has been rotated and the mold closed.

11. The method as claimed in claim 10, **characterized in that** it involves the following successive steps for obtaining both said covering/s (13', 13") and said film/s (14', 14") respectively on said sealing (12', 12") and fixing (11', 11") portions:
a) the installation of an embellishment strip intended to form this film at a first location in said mold (20, 20'),
b) the injection directly onto this embellishment strip of said at least one rigid material intended to form a clamping core (11a', 11a") that clamps the fixing portion to said support,
c) the installation of an antifriction strip intended to form this covering at a second location of said fixed part (21, 21') of the mold, followed by
d) injection directly onto this antifriction strip of said at least one flexible material in order to obtain said sealing portion formed as one piece with said fixing portion.

12. The method as claimed in claim 10, **characterized in that** it involves the following successive steps for obtaining both said covering (13) and said film (14) respectively on said sealing (12) and fixing (11) portions:
a) the injection of said at least one rigid material intended to form a clamping core (11a) for clamping the fixing portion to said support,
b) the installation, at a first and second location of said mold (20), of an antifriction strip and of an embellishment strip which are respectively intended to form said covering and said film, followed by
c) the injection directly onto this antifriction strip and onto this embellishment strip of said at least one flexible material to obtain said sealing and fixing portions formed as a single piece and respectively bearing said covering and said film.

13. The method as claimed in one of claims 9 to 12, **characterized in that** it comprises suction of said strip/s intended to form said covering (13") and/or said film (14", 14''') at the time of injection, via a plurality of suction channels (28) formed through said mold (20, 20') and opening respectively onto said sealing face (12a") and/or onto said visible face (11c") in order to hold the or each strip in position in the mold, and preferably **in that** it further comprises positioning at least one protective tape (29) made of microporous material in said mold (20, 20'), the or each tape receiving the antifriction strip intended to form said covering (13") and/or the embellishment strip intended to form said film (14", 14''') and being able to prevent said suction from marking this strip.
